# EUROPÄISCHE PATENTANMELDUNG

(11) **EP 0 822 124 A1**
(43) Veröffentlichungstag der Anmeldung: **04.02.1998**
(21) Anmeldenummer: 97111755.1
(22) Anmeldetag: 10.07.1997
(51) Int. Cl.: B60R 21/20

(54) **Gassack-Modul für ein Fahrzeuginsassen-Rückhaltesystem**

(30) Priorität: 31.07.1996 DE 29613269 U
(71) Anmelder: TRW Occupant Restraint Systems GmbH, 73551 Alfdorf (DE)
(72) Erfinder: Berger, Jürgen, 73557 Mutlangen (DE)
(74) Vertreter: Degwert, Hartmut, Dipl.-Phys.

(57) **Zusammenfassung**

Ein Gassack-Modul für ein Fahrzeuginsassen-Rückhaltesystem, mit einem langgestreckten Gehäuse (10), das mit einer Durchlaßöffnung (18) versehen ist, einer allgemein rohrförmigen Druckgasquelle (20), die an einem ersten axialen Ende in ihrer Mantelfläche mehrere Ausströmöffnungen für das Druckgas aufweist, und einem Druckkammerteil (30), das die Druckgasquelle (20) an ihrem mit den Ausströmöffnungen versehenen Ende umschließt und einen mit der Durchlaßöffnung in Verbindung stehenden Strömungskanal bildet, in den die Ausströmöffnungen münden, ist dadurch gekennzeichnet, daß das Druckkammerteil (30) ein von dem Gehäuse (10) getrenntes und an diesem befestigtes Teil ist und daß an dem Gehäuse eine Halteschelle (40) befestigt ist, welche die Mantelfläche der Druckgasquelle (20) an deren zweitem Ende umgreift.

## Beschreibung

Die Erfindung betrifft ein Gassack-Modul für ein Fahrzeuginsassen-Rückhaltesystem, mit einem langgestreckten Gehäuse, das mit einer Durchlaßöffnung versehen ist, einer allgemein rohrförmigen Druckgasquelle, die an einem ersten axialen Ende in ihrer Mantelfläche mehrere Ausströmöffnungen für das Druckgas aufweist, und einem Druckkammerteil, das die Druckgasquelle an ihrem mit den Ausströmöffnungen versehenen Ende umschließt und einen mit der Durchlaßöffnung in Verbindung stehenden Strömungskanal bildet, in den die Ausströmöffnungen münden.

Ein solches Gassack-Modul ist aus der DE 44 15 374 A1 bekannt. An dem Gehäuse kann ein Gassack befestigt werden, der mit der Druckgasquelle in einer Strömungsverbindung steht. Wenn eine geeignete Auslösesensorik feststellt, daß aufgrund der auftretenden Fahrzeugverzögerungen ein Aktivieren des Gassack-Moduls zu erfolgen hat, wird das Druckgas der Druckgasquelle freigegeben, das den Gassack entfaltet, so daß dieser eine Schutzfunktion für einen Fahrzeuginsassen bereitstellen kann.

Erfindungsgemäß ist bei einem Gassack-Modul der eingangs genannten Art vorgesehen, daß das Druckkammerteil ein von dem Gehäuse getrenntes und an diesem befestigtes Teil ist und daß an dem Gehäuse eine Halteschelle befestigt ist, welche die Mantelfläche der Druckgasquelle an deren zweitem Ende umgreift. Durch diese Gestaltung ergibt sich ein Gassack-Modul mit besonders einfachem Aufbau. Die Einzelteile können unabhängig voneinander hergestellt und montiert werden. Daraus resultiert, daß alle Teile des Gassack-Moduls, insbesondere das Gehäuse, das Druckkammerteil und die Halteschelle, im Hinblick auf die jeweils auftretenden Beanspruchungen ausgelegt werden können. Weiterhin kann für jedes einzelne Teil das jeweils optimale Herstellungsverfahren gewählt werden. Außerdem kann die Druckgasquelle in besonders einfacher Weise montiert werden. Sie braucht lediglich in das vormontierte Gassack-Modul in axialer Richtung eingeschoben werden, bis ihr mit den Ausströmöffnungen versehenes axiales Ende in dem Druckkammerteil aufgenommen ist. Die endgültige Festlegung erfolgt mittels der Halteschelle. Es ist keinerlei Anschlag erforderlich, der die Druckgasquelle auf ihrem zu den Ausströmöffnungen entgegengesetzten axialen Ende hält. Somit können ohne Änderungen des Gassack-Moduls in dieses Druckgasquellen mit unterschiedlichen Längen eingebaut werden, wodurch das Gassack-Modul in besonders einfacher Weise an verschiedene Verwendungsbedingungen angepaßt werden kann.

Gemäß einer bevorzugten Ausführungsform der Erfindung ist vorgesehen, daß das Gassack-Modul mit einem Gassack versehen ist und daß dieser Gassack an dem Gehäuse des Gassack-Moduls befestigt ist. Somit können die Reaktionskräfte, die beim Entfalten des Gassacks entstehen, direkt in das Gehäuse eingeleitet werden.

Weiterhin ist gemäß einer bevorzugten Ausführungsform der Erfindung vorgesehen, daß im Inneren des Gassacks ein an dem Gehäuse befestigter Befestigungsrahmen angeordnet ist und daß der Gassack durch Klemmung zwischen dem Befestigungsrahmen und dem Gehäuse gehalten ist. Mittels des Befestigungsrahmens läßt sich der Gassack besonders zuverlässig an dem Gehäuse befestigen. Weiterhin kann der Gassack auf dem Befestigungsrahmen zusammengefaltet und dann fixiert werden, so daß der Gassack und der Befestigungsrahmen, wie dies gemäß einer bevorzugten Ausführungsform vorgesehen ist, eine vormontierte Baugruppe bilden.

Weitere vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in der Zeichnung dargestellt ist. In dieser zeigen:
- Figur 1 eine perspektivische Ansicht eines montierten erfindungsgemäßen Gassack-Moduls;

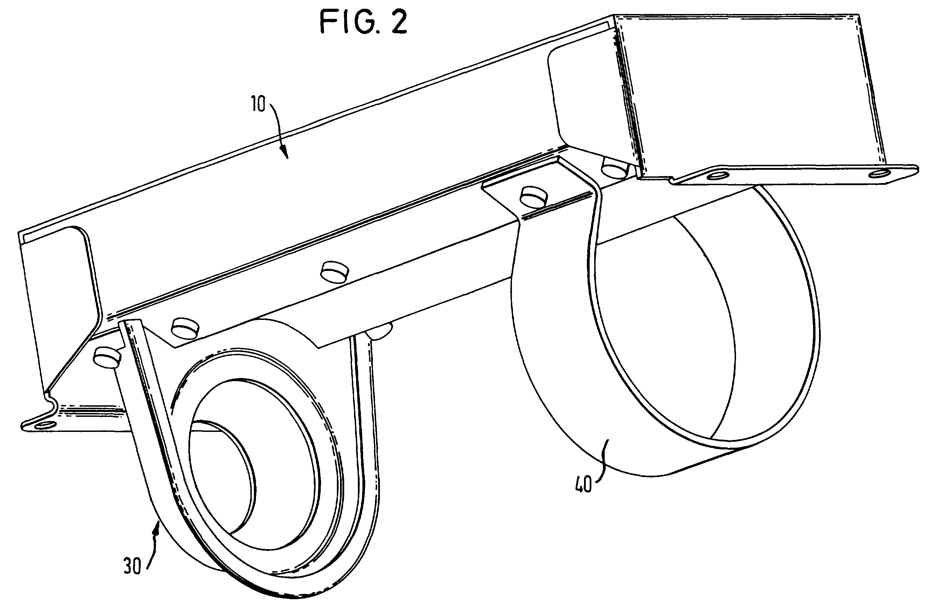

- Figur 2 eine Ansicht entsprechend derjenigen von Figur 1 vor dem Einsetzen der Druckgasquelle;
- Figur 3 einen schematischen Querschnitt durch das Gassack-Modul von Figur 1 im Bereich der Halteschelle;
- Figur 4 eine schematische perspektivische Ansicht des Gehäuses;

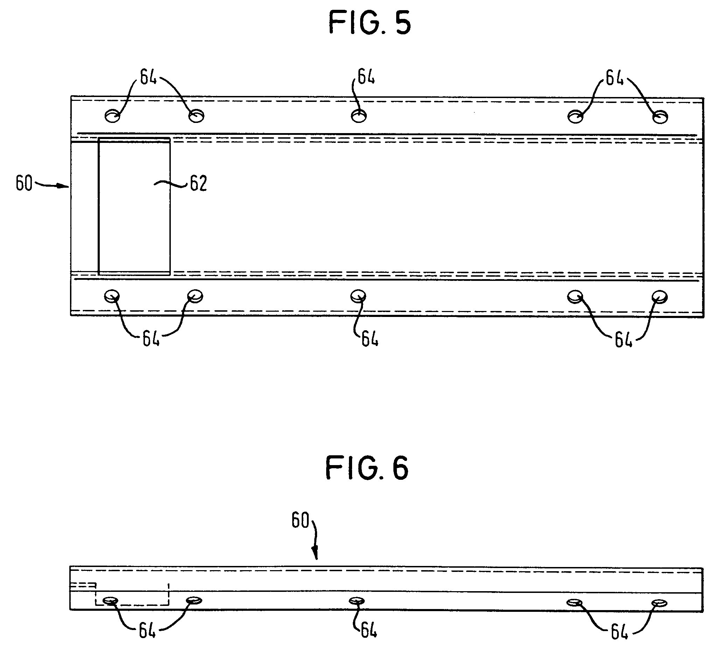

- Figur 5 eine schematische Draufsicht auf den Befestigungsrahmen;
- Figur 6 eine schematische Seitenansicht des Befestigungsrahmens von Figur 5;
- Figur 7 einen schematischen Querschnitt durch das bei dem Gassack-Modul von Figur 1 verwendete Druckkammerteil; und
- Figur 8 eine schematische Seitenansicht des Druckkammerteils von Figur 7.

Das in der Zeichnung dargestellte Gassack-Modul besteht gemäß einer bevorzugten Ausführungsform der Erfindung im wesentlichen aus einem Gehäuse 10, einer Druckgasquelle 20, einem Druckkammerteil 30 und einer Halteschelle 40. Im Inneren des Gehäuses 10 sind ein Gassack 50 und ein Befestigungsrahmen 60 angeordnet.

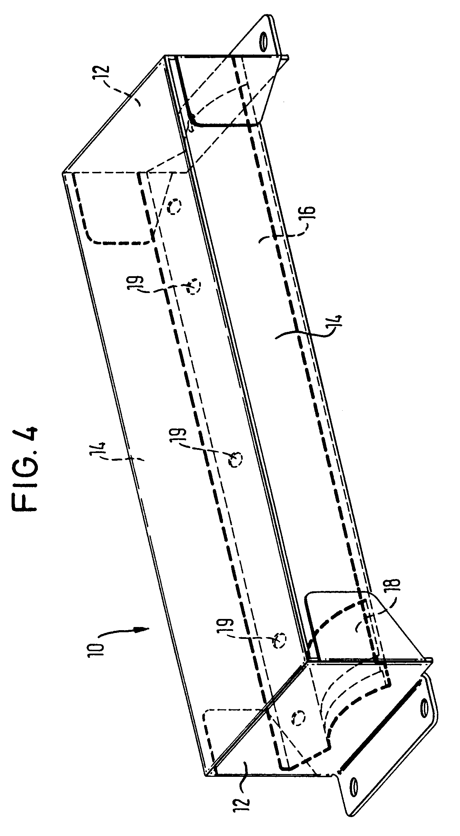

Das Gehäuse 10 (siehe insbesondere Figur 4) hat eine langgestreckte rechteckige Gestalt. Es besteht im wesentlichen aus zwei Stirnwänden 12 und zwei Seitenwänden 14. An der Unterseite weist das Gehäuse 10 ein Bodenteil 16 auf, das mit einer Durchgangsöffnung 18 versehen ist. Im Bodenteil 16 sind ferner entlang den beiden Seitenwänden 14 mehrere Öffnungen 19 gebildet.

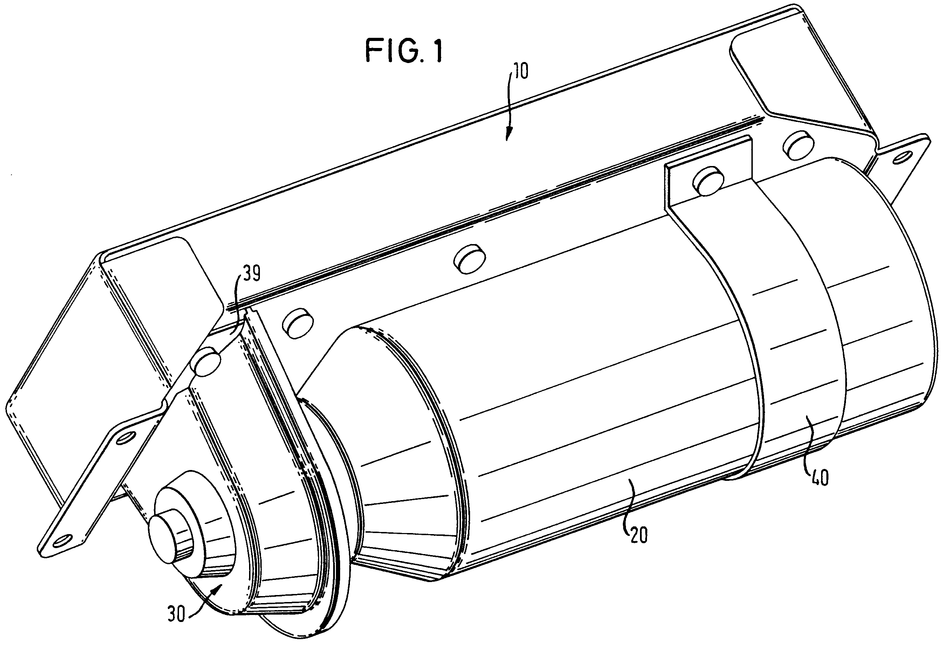

Die Druckgasquelle 20 ist ein flaschenartiger Druckgasbehälter, in der ein unter hohem Druck stehendes Gasgemisch eingeschlossen ist. Die Druckgasquelle weist an ihrem bezüglich Figur 1 linken, ersten axialen Ende in ihrer Mantelfläche mehrere (nicht dargestellte) Ausströmöffnungen für das Druckgas auf, die im Ausgangszustand verschlossen sind und im Bedarfsfall geöffnet werden können. Vorzugsweise ist die Druckgasquelle 20 eine standardisierte Druckgasquelle des Typs HGI, die einen Außendurchmesser von 60 mm oder 75 mm aufweist.

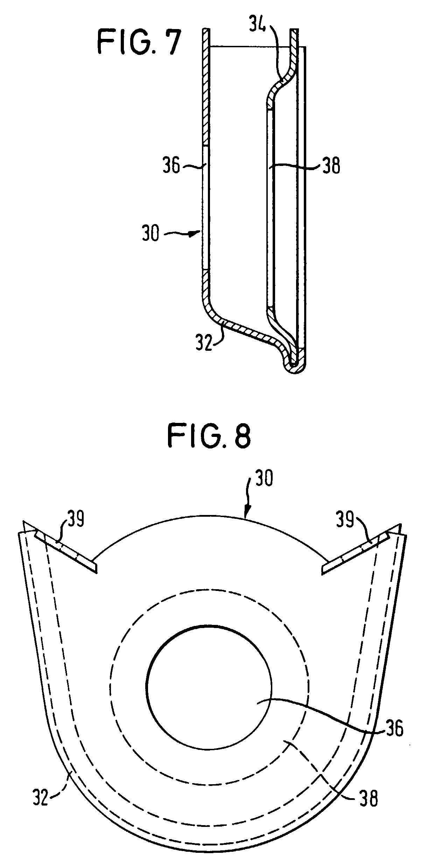

Das Druckkammerteil 30 (siehe insbesondere Figuren 7 und 8) besteht bei der dargestellten Ausführungsform aus einem allgemein topfförmigen Blechteil 32 und einem allgemein scheibenförmigen Blechteil 34. Alternativ kann das Druckkammerteil 30 ein Spritzguß- oder Druckgußteil sein. Das scheibenförmige Blechteil 34 ist mit dem topfförmigen Blechteil 32 an dessen oberem Umfangsrand verbunden. Beide Blechteile 32, 34 weisen jeweils eine Öffnung 36 bzw. 38 auf. Diese Öffnungen sind zueinander konzentrisch, und ihr Durchmesser ist an die Abmessungen des axialen Endes der Druckgasquelle 20 angepaßt, an dem die Ausströmöffnungen gebildet sind. Wenn das mit den Ausströmöffnungen versehene Ende der Druckgasquelle 20 in das Druckkammerteil 30 eingesetzt ist, bildet dieses einen das entsprechende Ende der Druckgasquelle 20 umschließenden Strömungskanal, in den die Ausströmöffnungen münden. Dieser Strömungskanal ist allgemein ringförmig und an dem bezüglich Figur 7 oberen Ende des Druckkammerteils 30 geöffnet. An seinem oberen Ende ist das Druckkammerteil 30 mit zwei Befestigungslaschen 39 versehen, mittels denen es am Rahmen 10 befestigt werden kann. Die für die Befestigung des Druckkammerteils 30 verwendeten Öffnungen 19 im Gehäuse 10 sind so angeordnet, daß der in dem Druckkammerteil 30 gebildete Strömungskanal mit der Durchlaßöffnung 18 im Gehäuse 10 in einer Strömungsverbindung steht.

Die Halteschelle 40 hat eine streifenförmige gebogene Gestalt, und sie ist an jedem Ende mit einer Öffnung versehen, die für die Befestigung der Halteschelle 40 am Gehäuse 10 verwendet wird.

Der Gassack 50 weist eine (nicht dargestellte) Einblasöffnung auf, die mit der Durchgangsöffnung 18 im Gehäuse 10 in einer Strömungsverbindung steht. Im Ausgangszustand ist der Gassack 50 in einem zusammengefalteten Zustand in dem Gehäuse 10 aufgenommen. Im Bedarfsfall kann er mittels des von der Druckgasquelle 20 bereitgestellten und durch den Strömungskanal im Druckkammerteil 30, die Durchgangsöffnung 18 und die Einblasöffnung des Gassacks 50 strömenden Druckgases entfaltet werden.

Der Befestigungsrahmen 60 ist allgemein rechteckig, und seine Abmessungen sind so an die Abmessungen des Gehäuses 10 angepaßt, daß der Befestigungsrahmen 60 im Inneren des Gehäuses 10 angeordnet werden kann. Entsprechend der Durchgangsöffnung 18 im Gehäuse 10 ist auch der Befestigungsrahmen 60 mit einer Öffnung 62 für den Durchgang des von der Druckgasquelle 20 bereitgestellten Gases sowie mit Öffnungen 64 versehen, die entlang den Seiten des Befestigungsrahmens 62 verteilt sind.

Das Gehäuse 10, das Druckkammerteil 30, die Halteschelle 40 und der Befestigungsrahmen 60 bestehen vorzugsweise aus Blech. Die jeweiligen Abmessungen und Blechdicken sind an die auftretenden Belastungen angepaßt.

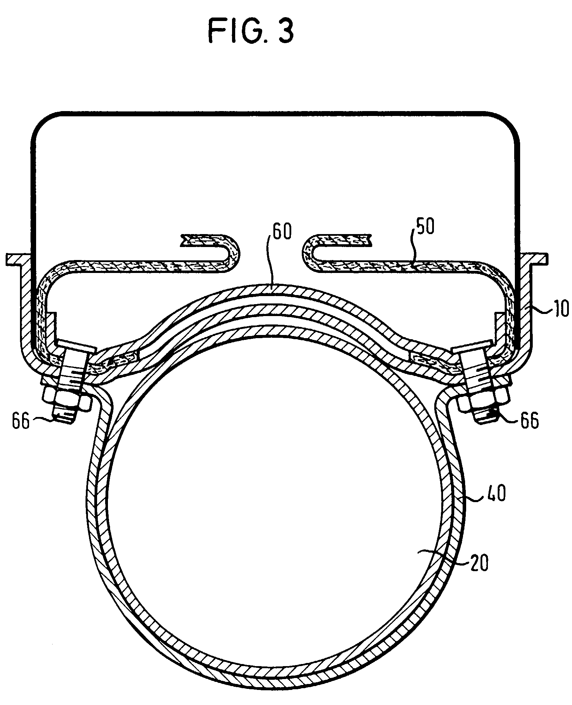

Das erfindungsgemäße Gassack-Modul kann beispielsweise in der folgenden Weise zusammengebaut werden: In die Öffnungen 64 des Befestigungsrahmens 60 werden Schraubbolzen 66 (siehe Figur 3) eingepreßt. Anschließend wird der Befestigungsrahmen 60 durch die Einblasöffnung des Gassacks 50 in dessen Inneres eingelegt, so daß die Schraubbolzen 66 Halteöffnungen durchqueren, die in der die Einblasöffnung umgebenden Wandung des Gassacks 50 ausgebildet sind. Somit sind der Gassack 50 und der Befestigungsrahmen 60 relativ zueinander fixiert. Anschließend wird der Gassack 50 auf dem Befestigungsrahmen zusammengelegt und mittels beispielsweise einer aufreißbaren Folie fixiert. Der Befestigungsrahmen 60 zusammen mit dem zusammengelegten Gassack 50 bildet somit eine vormontierte Baugruppe.

Anschließend wird diese vormontierte Baugruppe in das Innere des Gehäuses 10 eingesetzt, so daß die Schraubbolzen 66 sich durch die Öffnungen 19 im Gehäuse 10 hindurch erstrecken. Durch Aufschrauben von Schraubmuttern auf beispielsweise die mittleren Schraubbolzen kann die vormontierte Baugruppe an dem Gehäuse 10 befestigt werden. Anschließend wird das Druckkammerteil 30 an dem mit der Durchgangsöffnung 18 versehenen Ende des Gehäuses 10 befestigt, und die Halteschelle 40 wird an dem entgegengesetzten Ende des Gehäuses 10 befestigt. In beiden Fällen werden hierzu die Schraubenbolzen 66 des Befestigungsrahmens 60 verwendet. Während das Druckkammerteil 30 bereits fest mit dem Gehäuse 10 verschraubt werden kann, wird die Halteschelle 40 vorzugsweise nur leicht fixiert. Anschließend kann als letzter Arbeitsschritt die Druckgasquelle 20 in axialer Richtung durch die Halteschelle 40 hindurch mit ihrem mit den Ausströmöffnungen versehenen axialen Ende in das Druckkammerteil 30 hineingeschoben werden. Anschließend werden alle Schraubmuttern auf den Schraubbolzen 66 angezogen, auch diejenigen der Halteschelle 40. Somit ist zum einen die Druckgasquelle 20 sicher in sowohl axialer als auch radialer Richtung am Gehäuse 10 gehalten und zum anderen der Gassack 50 durch Klemmung sicher zwischen dem Gehäuse 10 und dem Befestigungsrahmen 60 gehalten.

Bei einer solchen Ausgestaltung eines erfindungsgemäßen Gassack-Moduls ergeben sich insbesondere die folgenden Vorteile: Die Druckgasquelle 20 kann als letztes eingesetzt werden, was hinsichtlich der Sicherheit beim Montagevorgang ein großer Vorteil ist. Weiterhin ergibt sich ein besonders kompaktes Gassack-Modul mit geringem Gewicht.

## Patentansprüche

1. Gassack-Modul für ein Fahrzeuginsassen-Rückhaltesystem, mit
einem langgestreckten Gehäuse (10), das mit einer Durchlaßöffnung (18) versehen ist,
einer allgemein rohrförmigen Druckgasquelle (20), die an einem ersten axialen Ende in ihrer Mantelfläche mehrere Ausströmöffnungen für das Druckgas aufweist, und
einem Druckkammerteil (30), das die Druckgasquelle (20) an ihrem mit den Ausströmöffnungen versehenen Ende umschließt und einen mit der Durchlaßöffnung in Verbindung stehenden Strömungskanal bildet, in den die Ausströmöffnungen münden,
dadurch gekennzeichnet,
daß das Druckkammerteil (30) ein von dem Gehäuse (10) getrenntes und an diesem befestigtes Teil ist und
daß an dem Gehäuse eine Halteschelle (40) befestigt ist, welche die Mantelfläche der Druckgasquelle (20) an deren zweitem Ende umgreift.

2. Gassack-Modul nach Anspruch 1, dadurch gekennzeichnet, daß das Gassack-Modul mit einem Gassack (50) versehen ist und daß dieser Gassack (50) an dem Gehäuse (10) des Gassack-Modul befestigt ist.

3. Gassack-Modul nach Anspruch 2, dadurch gekennzeichnet, daß im Inneren des Gassacks (50) ein an dem Gehäuse (10) befestigter Befestigungsrahmen (60) angeordnet ist und daß der Gassack (50) durch Klemmung zwischen dem Befestigungsrahmen (60) und dem Gehäuse (10) gehalten ist.

4. Gassack-Modul nach Anspruch 3, dadurch gekennzeichnet, daß der Befestigungsrahmen (60) mit Schraubbolzen (66) versehen ist, die Halteöffnungen in der die Einblasöffnung umgebenden Wandung des Gassacks (50) durchqueren.

5. Gassack-Modul nach Anspruch 4, dadurch gekennzeichnet, daß das Druckkammerteil (30) und die Halteschelle (40) mittels der Schraubbolzen (66) an dem Gehäuse (10) befestigt sind.

6. Gassack-Modül nach einem der Ansprüche 3 und 4, dadurch gekennzeichnet, daß der Gassack (50) mit dem Befestigungsrahmen (60) eine vormontierte Baugruppe bildet.

7. Gassack-Modul nach einem der vorhergehenden Ansprüche, dadurch gekennzeichnet, daß die Druckgasquelle (20) als letzter Schritt bei der Montage des Gassack-Moduls einsetzbar ist.

8. Gassack-Modul nach einem der vorhergehenden Ansprüche, dadurch gekennzeichnet, daß das Gehäuse (10) ein Blechbiegeteil ist.

9. Gassack-Modul nach einem der vorhergehenden Ansprüche, dadurch gekennzeichnet, daß das Druckkammerteil (30) ein Blechteil ist.

10. Gassack-Modul nach einem der Ansprüche 1 bis 8, dadurch gekennzeichnet, daß das Druckkammerteil (30) ein Gußteil ist.
